# EUROPÄISCHE PATENTSCHRIFT

(11) **EP 3 073 127 B1**
(45) Veröffentlichungstag und Bekanntmachung des Hinweises auf die Patenterteilung: **24.06.2020**
(21) Anmeldenummer: 16157157.5
(22) Anmeldetag: 24.02.2016
(51) Int. Cl.: F15B 15/14, F16H 48/20, F16H 48/32

(54) **KOLBEN-HÜLSEN-BAUTEIL FÜR EIN MIT DRUCKMITTEL BEAUFSCHLAGBARES STELLGLIED, MIT DRUCKMITTEL BEAUFSCHLAGBARES STELLGLIED SOWIE VERTEILERGETRIEBE**
PISTON-SLEEVES COMPONENT FOR AN ACTUATOR WHICH CAN BE SUBJECTED TO A PRESSURISED MEDIUM, ACTUATOR WHICH CAN BE SUBJECTED TO A PRESSURISED MEDIUM AND DISTRIBUTOR GEAR
COMPOSANT PISTON-CYLINDRE POUR VERIN A PRESSION, VERIN A PRESSION ET BOITE DE TRANSFERT

(30) Priorität: 24.03.2015 DE 102015205302; 09.10.2015 DE 102015219631
(43) Veröffentlichungstag der Anmeldung: 28.09.2016
(73) Patentinhaber: ZF Friedrichshafen AG, 88046 Friedrichshafen (DE)
(72) Erfinder: Brilka, Tobias, 94034 Passau (DE)
(74) Vertreter: ZF Friedrichshafen AG

(56) Entgegenhaltungen:
- WO-A1-2011/154274
- DE-A1- 1 750 379
- US-A- 2 137 249

## Beschreibung

Die Erfindung betrifft eine Anordnung bestehend aus einer Schaltstange und einem Kolben-Hülsen-Bauteil für ein mit Druckmittel beaufschlagbares Stellglied gemäß dem Oberbegriff von Anspruch 1, ein mit Druckmittel beaufschlagbares Stellglied sowie ein Verteilergetriebe gemäß dem Oberbegriff von Anspruch 17.

Im Stand der Technik sind sog. Differentialgetriebe bekannt, welche insbesondere auch in den Antriebssträngen von Kraftfahrzeugen Verwendung finden. Diese Differentialgetriebe ermöglichen über ihre Verteilerfunktion eine situationsangepasste Verteilung des Motormoments auf die Fahrzeugräder. Baustellenfahrzeuge, wie z.B. Bagger oder Radlader, die sich regelmäßig in unwegsamem Gelände fortbewegen, sind darüber hinaus oftmals zusätzlich mit einer sog. Differentialsperre ausgestattet, welche die Verteilerfunktion des Differentialgetriebes sperren kann und somit dafür sorgt, dass die Drehzahl und das Drehmoment der Räder der gesperrten Achse jeweils identisch sind. Dies gewährleistet ein bestmögliches Fortkommen derartiger Fahrzeuge selbst in äußerst unwegsamem Gelände. Das Einrücken bzw. Ausrücken dieser Differentialsperren erfolgt dabei über hierfür geeignete Aktuatoren, welche üblicherweise mittels einer Schaltgabel in eine Schiebemuffe eingreifen und diese zur Betätigung der Differentialsperre in eine das Differential sperrende oder das Differential freigebende Position schieben.

In diesem Zusammenhang beschreibt die DE 103 34 450 A1 eine formschlüssige Differentialsperre für Verteilergetriebe und Ausgleichsgetriebe von Fahrzeugen. Die bekannte Differentialsperre wird von einem mit Druckfluid beaufschlagbaren, doppelwirkenden Betätigungszylinder betätigt. Dies ermöglicht das Einrücken der Differentialsperre ohne Gegenkraft. Ab einem definierten Verschiebeweg des Kolbens im Betätigungszylinder, bei welchem die Differentialsperre eingerückt ist, verschließt ein Steuerschieber eine Druckmittelrückführleitung der nicht mit Druck beaufschlagten Kammer. Gleichzeitig wird der Druck in der mit Druck beaufschlagten Kammer reduziert, so dass die Differentialsperre ausschließlich von einem anliegenden Drehmoment im eingerückten Zustand gehalten wird. Fällt das Drehmoment unter ein definiertes Niveau, so wird die Differentialsperre selbsttätig ausgerückt.

Aus der EP 0 510 457 B1 sind eine formschlüssige Kupplung für ein Verteilergetriebe eines Kraftfahrzeugs und ein Verfahren zu deren Betätigung bekannt. Die als Klauenkupplung ausgebildete Kupplungsanordnung besteht einerseits aus einem treibenden Kupplungsteil, welcher mit einem angetriebenen Radantriebsstrang in Verbindung steht und andererseits aus einem getriebenen Kupplungsteil, welcher mit einem zu aktivierenden Radantriebsstrang verbunden ist und eine Schiebemuffe umfasst, um über ein Einrückglied mittels einer Schaltgabel bewegt zu werden. Das Einrückglied umfasst einen Kolben mit einer Kolbenstange und einen Fluidzylinder. Am vorderen Ende der Kolbenstange ist eine Schaltgabel befestigt. Der Kolben wird auf einer Seite mit Fluid beaufschlagt während sich auf einer anderen Seite eine Druckfeder abstützt. In der Ruhestellung wird die Schaltgabel durch die Druckfeder in eine erste Richtung gedrückt und bringt die Kupplung in einen ausgerückten Zustand. Der eingerückte Zustand der Kupplung wird dadurch erreicht, dass durch eine entsprechende Druckbeaufschlagung die Kolbenstange in eine zweite Richtung bewegt wird, bis die Kupplungsteile formschlüssig miteinander verbunden sind.

Die WO 20111554274 zeigt eine Vorrichtung zum axialen Verschieben einer Welle in einem Fahrzeuggetriebe, insbesondere einem Fahrzeuggetriebe eines Nutzfahrzeugs, bei dem über eine Gabel Kräfte in einer axialen Richtung auf die Welle des Fahrzeuggetriebes ausgeübt werden, wobei die Vorrichtung einen in der axialen Richtung beweglichen Kolben n einem Kolbengehäuse umfasst, wobei der Kolben auf einer inneren Führung gelagert ist, und wobei ein Ende der inneren Führung auf einer Seite aus dem Kolbengehäuse hinausragt und dort mit einem Gehäuse des Fahrzeuggetriebes verbunden und gegenüber diesem festgelegt ist.

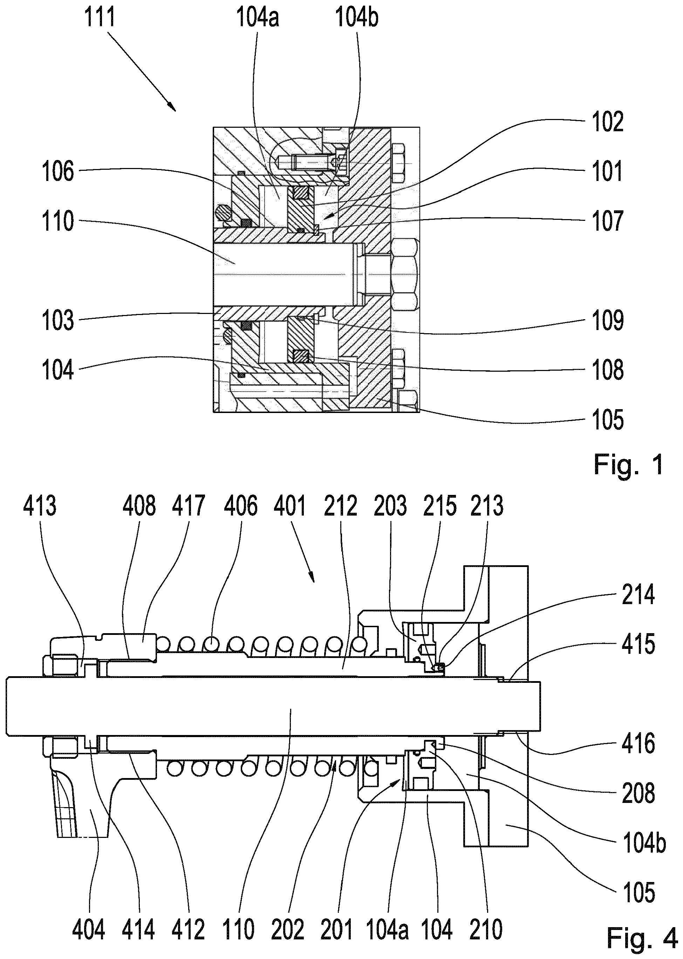

Die Fig. 1 zeigt weiterhin ein der Anmelderin bekanntes Kolben-Hülsen-Bauteil eines einfachwirkenden fluidbetätigbaren Aktuators. Der Aktuator umfasst u.a. ein als Schraubenfeder ausgebildetes Rückstellelement und eine mit Fluiddruck beaufschlagbare Arbeitskammer eines Arbeitszylinders. Der Kolben des Kolben-Hülsen-Bauteils ist dabei formschlüssig auf der Führungshülse des Kolben-Hülsen-Bauteils angeordnet, wobei er auf einer Seite durch eine radiale Umfangszunahme der Führungshülse abgestützt wird und auf der anderen Seite durch einen Sicherungsring abgestützt wird.

Aus der US 2 137 249 ist ein Fahrzeuggetriebe bekannt, welches mit zwei Hinterrädern versehen ist, wobei die zwei Hinterräder mit Antriebswellen verbunden sind. Weiterhin umfasst das Fahrzeuggetriebe Mittel zum Antreiben der Antriebswellen, welche ihrerseits eine Kupplung umfassen, die verschiebbar und antreibbar mit den Antriebswellen verbunden ist. Schließlich umfasst das Fahrzeuggetriebe auch ein Hohlrad, welches trieblich mit der Kupplung verbunden ist sowie entsprechende Mittel zum Verbinden des Hohlrads mit der Kupplung.

Aus der DE 17 50 379 A1 ist ein Kraftelement, bestehend aus einem Zylinder und einem im Zylinder durch ein Druckmittel bewegbaren Kolben bekannt. Mittels einer Druckbeaufschlagung des Kolbens kann der Kolben betätigt werden. Die Bewegung des Kolbens wird auf ein weiteres Element übertragen. Der Kolben ist dabei mit dem Element bajonettverschlussartig verbunden, wobei der Kolben zumindest grob scheibenartig ausgebildet ist und eine Öffnung aufweist

Die bekannten Kupplungen bzw. Differentialsperren sind jedoch insofern nachteilbehaftet, als dass die mechanische Stabilität der Aktuatoren dieser Kupplungen bzw. Differentialsperren den hohen auftretenden Belastungen häufig nicht dauerhaft gewachsen ist. Insbesondere die Verbindung des Kolbens zu einer die Schaltstange umgreifenden und auf der Schaltstange axial verschiebbaren Führungshülse stellt aufbaubedingt eine mechanische Schwachstelle des Aktuators dar. Bei der Montage derartiger Aktuatoren ist es nämlich üblich, den Kolben direkt im Arbeitszylinder mittels eines Sicherungsrings auf der Führungshülse zu fixieren. Da der Kolben jedoch bei jedem Ein- bzw. Ausrückvorgang mit vergleichsweise großem pneumatischem oder hydraulischem Druck beaufschlagt wird, ist die mechanische Festigkeit einer derartigen Anbringung im Dauerbetrieb oftmals nicht ausreichend und führt zu einem unerwünschten Ablösen des Kolbens von der Führungshülse.Gleichzeitig unterliegt die Montage des Kolbens im Arbeitszylinder engen Bauraumrestriktionen.

Es ist eine Aufgabe der vorliegenden Erfindung, eine verbesserte Anordnung bestehend aus einer Schaltstange und einem Kolben-Hülsen-Bauteil für ein mit Druckmittel beaufschlagbares Stellglied vorzuschlagen.

Diese Aufgabe wird erfindungsgemäß durch eine Anordnung bestehend aus einer Schaltstange und einem Kolben-Hülsen-Bauteil für einen fluidbetätigbaren Aktuator gemäß Anspruch 1 gelöst. Vorteilhafte Ausgestaltungen und Weiterbildungen der Erfindung gehen aus den abhängigen Ansprüchen hervor.

Die Erfindung betrifft eine Anordnung bestehend aus einer Schaltstange und einem Kolben-Hülsen-Bauteil für ein mit Druckmittel beaufschlagbares Stellglied, wobei das Kolben-Hülsen-Bauteil einen Kolben und eine Hülse, wobei die Hülse rohrartig derart ausgebildet ist, dass sie die Schaltstange unter Gewährleistung einer axialen Verschiebbarkeit auf der Schaltstange radial einfassen kann und wobei der Kolben scheibenartig und mit einer den Kolben axial durchdringenden Öffnung ausgebildet ist. Das erfindungsgemäße Kolben-Hülsen-Bauteil zeichnet sich dadurch aus, dass ein Endstück der Hülse und die Öffnung des Kolbens derart ausgebildet sind, dass sie miteinander als Bajonettverschluss wirken.

Daraus ergibt sich gegenüber den bekannten Kolben-Hülsen-Bauteilen, welche auf einen Sicherungsring zur Fixierung des Kolbens auf der Hülse zurückgreifen, zunächst der Vorteil, dass ein Ablösen des Kolbens von der Hülse selbst unter vergleichsweise hohen Belastungen deutlich erschwert ist, da der Kolben durch den Bajonettverschluss, also eine Formschlussverbindung, nicht mehr von der Hülse entfernt werden kann. Es hat sich nämlich gezeigt, dass der Bajonettverschluss aufgrund seiner gegenüber einem herkömmlichen Sicherungsring vergleichsweise massiven Ausbildungsform wesentlich besser dazu geeignet sind, auch hohe Kräfte beschädigungsfrei aufzunehmen.

Ein nochmals weit erer Vorteil des erfindungsgemäßen Kolben-Hülsen-Bauteils liegt in der Reduzierung der benötigten Einzelteile bei der Montage eines das erfindungsgemäße Kolben-Hülsen-Bauteil umfassenden Stellglieds, da vorteilhaft auf den üblicherweise benötigten Sicherungsring verzichtet werden kann. Dies reduziert den Montageaufwand.

Der Begriff "axial" bezeichnet im Sinne der Erfindung eine Richtung, die parallel zur Längsachse der Hülse verlauft. Der Begriff "radial" hingegen bezeichnet erfindungsgemäß eine Richtung, die orthogonal zur Längsachse der Hülse ausgerichtet ist.

Der Begriff "scheibenartig" beschreibt erfindungsgemäße eine im Wesentlichen flache geometrische Ausbildung des Kolbens, deren radiale Erstreckung größer als ihre axiale Erstreckung ist. Diese scheibenartige Ausbildung muss nicht zwingend einen kreisförmigen axialen Querschnitt aufweisen. Stattdessen sind auch kantige oder ovale axiale Querschnitte erfindungsgemäß möglich. Ebenso kann der Kolben strukturelle Erhebungen bzw. Vertiefungen sowohl in axialer als auch in radialer Richtung aufweisen.

Der Begriff "rohrartig" beschreibt im Sinne der Erfindung eine zumindest teilweise hohle und an mindestens einem axialen Ende eine Öffnung aufweisende Ausbildung der Hülse. Diese rohrartige Ausbildung muss nicht zwingend einen kreisförmigen axialen Querschnitt aufweisen. Stattdessen sind auch kantige oder ovale axiale Querschnitte erfindungsgemäß möglich.

Bevorzugt weist die Hülse jedoch eine an beiden axialen Enden jeweils eine Öffnung mit einem axial durchgehenden, tunnelartigen Hohlraum auf. Sofern jedoch nur ein axiales Ende der Hülse eine Öffnung aufweist, so ist dies vorzugsweise dasjenige Ende, welches dem durch die Öffnung des Kolbens führbaren Endstück der Hülse abgewandt ist.

Das Kolben-Hülsen-Bauteil besteht vorzugsweise aus Metall, insbesondere aus Stahl. Dies gewährleistet eine vergleichsweise große Robustheit und damit Langlebigkeit des Kolben-Hülsen-Bauteils auch unter regelmäßigen und hohen Belastungen. Besonders bevorzugt bestehen der Kolben und die Hülse aus demselben Metall.

Bevorzugt ist es vorgesehen, dass das erfindungsgemäße Kolben-Hülsen-Bauteil bzw. der Kolben bzw. die Hülse spanend hergestellt wird. Alternativ und ebenso bevorzugt ist aber auch eine nicht-spanende Herstellungsweise des Kolben-Hülsen-Bauteils bzw. des Kolbens bzw. der Hülse möglich, z.B. mittels Kaltverformens.

Weiterhin ist es bevorzugt, dass die Öffnung des Kolbens kreisförmig ausgebildet ist. Insbesondere ist auch ein axialer Querschnitt der Hülse kreisförmig. Dies begünstigt eine verbesserte Abdichtbarkeit des Kolbens gegen die Hülse hinsichtlich eines zur Betätigung des Stellglieds verwendeten Druckmittels. Alternativ ist jedoch auch eine ovale, elliptische oder kantige Ausbildung der Öffnung und eine entsprechend angepasste Ausbildung des axialen Querschnitts der Hülse möglich. Ganz besonders bevorzugt sind die Öffnung des Kolbens und der axiale Querschnitt der Hülse derart aufeinander abgestimmt, dass sie eine bündige Verbindung mit nur geringem radialem und axialem Spiel erlauben.

Vorzugsweise ist die Öffnung koaxial im Kolben angeordnet. Dies führt zu einem gleichmäßigen Einwirken der durch eine Druckmittelbeaufschlagung erzeugten und auf den Kolben wirkenden Kraft, was wiederum die Belastbarkeit des erfindungsgemäßen Kolben-Hülsen-Bauteils verbessert.

Bevorzugt ist es vorgesehen, dass der Kolben zumindest an seinem radialen Innenumfang ein Dichtelement aufweist. Dadurch kann eine Druckmitteldichtigkeit des Kolbens gegenüber der Hülse verbessert werden. Da das erfindungsgemäße Kolben-Hülsen-Bauteil zur Verwendung in einem fluidbetätigbaren Stellglied vorgesehen ist und eine Betätigung des Stellglieds maßgeblich durch eine Druckmittelbeaufschlagung erfolgt, ist die Druckmitteldichtigkeit von herausgehobener Bedeutung. Besonders bevorzugt weist der Kolben auch an seinem radialen Außenumfang ein Dichtelement auf, welches die Druckmitteldichtigkeit des Kolbens gegenüber weiteren Elementen des Stellglieds verbessert.

Als Dichtelement bzw. Dichtelemente können z.B. O-Ringe herangezogen werden. Insbesondere die Verwendung von Vierlippendichtringen bzw. die gleichzeitige Verwendung von zwei O-Ringen am radialen Außenumfang des Kolbens ist dabei bevorzugt. Besonders bevorzugt ist der Vierlippendichtring bzw. sind die zwei O-Ringe dazu in einer bzw. in jeweils einer hierfür geeigneten Nut angeordnet, welche radial um den Außenumfang des Kolbens umläuft.

Das durch die Öffnung des Kolbens geführte Endstück der Hülse ist bevorzugt nur bis zu einem vorgegebenen Anschlag durch die Öffnung führbar. Der vorgegebene Anschlag kann z.B. durch eine Zunahme des äußeren Radialumfangs der Hülse gewährleistet werden.

Gemäß einer bevorzugten Ausführungsform der Erfindung ist es vorgesehen, dass der Kolben einen die Öffnung axial teilweise bedeckenden inneren Bund als axiales Formschlusselement des Bajonettverschlusses aufweist. Da der innere Bund als Teil des Kolbens vergleichsweise massiv und stabil ausgebildet sein kann, so dass er auch vergleichsweise hohe Belastungen und Kräfte aufnehmen kann, eignet er sich vorteilhaft als Formschlusselement.

Gemäß einer weiteren bevorzugten Ausführungsform der Erfindung ist es vorgesehen, dass die Hülse mindestens einen das Endstück radial teilweise überragenden äußeren Bund sowie eine durch eine Ringnut vom einzelnen äußeren Bund getrennte Radialumfangszunahme der Hülse als axiale Formschlusselemente des Bajonettverschlusses aufweist. Auch der mindestens eine äußere Bund kann als Teil der Hülse vergleichsweise massiv ausgebildet sein, so dass auch er vergleichsweise hohe Belastungen und Kräfte aufnehmen kann. Ein Bajonettverschluss, der durch den genannten inneren Bund und den genannten äußeren Bund gebildet wird, ist dementsprechend ebenfalls vergleichsweise massiv und belastbar.

Gemäß einer weiteren bevorzugten Ausführungsform der Erfindung ist es vorgesehen, dass in einer Verschlussposition des Bajonettverschlusses der innere Bund und die äußeren Bunde oder der innere Bund und der einzelne äußere Bund axial überlagert sind, so dass eine axial formschlüssige Verbindung des Kolbens mit der Hülse besteht. Diese formschlüssige Verbindung stellt also den Bajonettverschluss dar, wobei die Verbindung aufgrund der beschriebenen und vergleichsweise massiven Ausbildung des Bajonettverschlusses ebenfalls vergleichsweise massiv und belastbar ist.

Der Begriff "Verschlussposition" beschreibt im Sinne der Erfindung einen Zustand des Bajonettverschlusses, welcher nach dem Einführen der Hülse in die Öffnung des Kolbens durch entgegengesetztes Verdrehen des Kolbens zur Hülse um die Längsachse erreicht wird. In diesem Zustand sind die Hülse und der Kolben axial formschlüssig verbunden. Die Verschlussposition muss sich dabei nicht auf einen spezifischen Verdrehwinkel begrenzen sondern kann auch einen Verdrehwinkelbereich von bis zu 180° einnehmen.

Gemäß einer weiteren bevorzugten Ausführungsform der Erfindung ist es vorgesehen, dass der innere Bund kreisabschnittsförmig oder ringabschnittsförmig ausgebildet ist und dass mindestens ein äußerer Bund derart ausgebildet ist, dass er in einer Einführposition des Bajonettverschlusses den inneren Bund zu einem vollständigen axialen Ring ergänzt. In anderen Worten bedeutet dies, dass - ausgehend von einem gedachten, vollständigen axialen Ring um das Endstück der Hülse - ein oder mehrere Kreisabschnitte oder Ringabschnitte dieses Rings gedanklich vom Ring abgetrennt werden und die Öffnung im Kolben teilweise bedeckend als innerer Bund am Kolben angeordnet werden. Die gedanklich verbleibenden Flächenabschnitte des axialen Rings werden nun das Endstück der Hülse radial teilweise überragend als äußerer Bund an der Hülse angeordnet. Eine derartige Ausbildungsform hat sich als vergleichsweise einfach herstellbar und gleichzeitig sehr belastbar erwiesen.

Der Begriff "Einführposition" beschreibt im Sinne der Erfindung einen Zustand des Bajonettverschlusses, in welchem einerseits ein Einführen der Hülse in die Öffnung des Kolbens möglich ist und andererseits auch ein Herausführen der Hülse aus der Öffnung des Kolbens möglich ist. Dieser Zustand ist abhängig vom eingenommenen Verdrehwinkel der Hülse relativ zum Kolben um die Längsachse und muss sich nicht auf einen spezifischen Verdrehwinkel begrenzen sondern kann auch einen Verdrehwinkelbereich von bis zu 180° einnehmen.

Unter dem Begriff "kreisabschnittsförmig" wird im Sinne der Erfindung ein Flächenanteil eines Vollkreises verstanden, der durch zwei Punkte auf dem Kreisrand definiert ist: Die zwei Punkte werden dazu durch eine gedachte Linie verbunden, so dass der durch die gedachte Linie und den kürzeren Kreisrand zwischen den zwei Punkten definierte Flächenanteil kreisabschnittsförmig im erfindungsgemäßen Sinne ist.

Unter dem Begriff "ringabschnittsförmig" wird im Sinne der Erfindung ein Flächenanteil eines Rings verstanden, der sich über einen vorgebbaren Winkelbereich um die Längsachse, nämlich den Verdrehwinkelbereich im erfindungsgemäßen Sinne, erstreckt, wobei sich dieser Winkelbereich vom radialen Mittelpunkt des Rings ausgehend bemisst.

Bevorzugt ist das Endstück der Hülse bzw. die Hülse in der Öffnung des Kolbens radial verdrehbar, insbesondere von der Einführposition in die Verschlussposition radial verdrehbar. Besonders bevorzugt ist das Endstück der Hülse bzw. die Hülse in der Öffnung des Kolbens erst bei Erreichen des vorgegebenen axialen Anschlags radial verdrehbar.

Bevorzugt ist es vorgesehen, dass der innere Bund und/oder der mindestens eine äußere Bund jeweils mehrteilig ausgebildet sind. Dies bedeutet also, dass mehrere, den inneren Bund darstellende kreisbogenförmige Flächenanteile jeweils die Öffnung des Kolbens teilweise bedecken und/oder dass mehrere, den äußeren Bund darstellende ringabschnittsförmige Flächenanteile jeweils das Endstück der Hülse teilweise radial überragen.

Gemäß einer weiteren bevorzugten Ausführungsform der Erfindung ist es vorgesehen, dass der innere Bund die Öffnung in einem Verdrehwinkelbereich von höchstens 180° bedeckt und/oder dass der äußere Bund das Endstück in einem Verdrehwinkelbereich von höchstens 180° überragt. Dies gewährleistet ein einfaches Durchführen des Endstücks der Hülse durch die Öffnung des Kolbens in der Einführposition. Da die Belastbarkeit des erfindungsgemäßen Kolben-Hülsen-Bauteils mit dem vom inneren Bund und vom äußeren Bund jeweils eingenommenen Verdrehwinkelbereich zunimmt, ist es insbesondere bevorzugt, dass der innere Bund die Öffnung in einem Verdrehwinkelbereich von 180° bedeckt und/oder dass der äußere Bund das Endstück in einem Verdrehwinkelbereich von 180° überragt.

Gemäß einer weiteren bevorzugten Ausführungsform der Erfindung ist es vorgesehen, dass das Kolben-Hülsen-Bauteil weiterhin eine Verdrehsicherung umfasst, wobei die Verdrehsicherung dazu ausgebildet ist, ein Verdrehen aus der Verschlussposition in die Einführposition zu blockieren zu blockieren. Somit kann vorteilhaft verhindert werden, dass das Kolben-Hülsen-Bauteil unbeabsichtigt aus der Verschlussposition in die Einführposition verdreht wird, was zur Folge hätte, dass der Bajonettverschluss geöffnet wäre und der Kolben nicht mehr formschlüssig und axialfest mit der Hülse verbunden wäre.

Gemäß einer besonders bevorzugten Ausführungsform der Erfindung ist es vorgesehen, dass die Verdrehsicherung eine axial verlaufende Bohrung im Kolben umfasst. Eine Bohrung bildet einen einfachen, belastbaren und für unterschiedlichste Verdrehsicherungsmittel geeigneten Angriffspunkt.

Die erfindungsgemäße Verdrehsicherung umfasst dabei eine Reihe von zusammenwirkenden Verdrehsicherungsmitteln, welche gemeinsam die Verdrehsicherung darstellen.

Bevorzugt ist es vorgesehen, dass die Verdrehsicherung eine Vielzahl von axial verlaufenden Bohrungen im Kolben umfasst.

Gemäß einer ganz besonders bevorzugten Ausführungsform der Erfindung ist es vorgesehen, dass die Verdrehsicherung weiterhin eine axial verlaufende Bohrung in der Hülse umfasst, wobei die Bohrung im Kolben und die Bohrung in der Hülse in der Verschlussposition fluchtend sind. Durch das Vorhandensein einer zusätzlichen Bohrung in der Hülse, insbesondere durch die in der Verschlussposition fluchtende Ausbildung der Bohrung im Kolben und der Bohrung in der Hülse, wird unterschiedlichsten Verdrehsicherungsmitteln ein gemeinsamer Angreifpunkt am Kolben und an der Hülse zum Fixieren der Verschlussposition geboten.

Bevorzugt ist es vorgesehen, dass die Verdrehsicherung auch eine Vielzahl von axial verlaufenden Bohrungen in der Hülse umfasst

Gemäß einer ganz besonders bevorzugten Ausführungsform der Erfindung ist es vorgesehen, dass die Bohrung im Kolben und/oder die Bohrung in der Hülse als Gewindebohrung ausgebildet ist. Eine Gewindebohrung ermöglicht vorteilhafterweise die Verwendung einer geeigneten Schraube als Verdrehsicherungsmittel. Eine Schraube als Verdrehsicherungsmittel bietet dabei allgemein die Vorteile hoher Stabilität und Robustheit in Verbindung mit vergleichsweise niedrigen Beschaffungskosten.

Bevorzugt ist es vorgesehen, dass die Vielzahl von axial verlaufenden Bohrungen im Kolben bzw. in der Hülse sämtlich oder teilweise als Gewindebohrungen ausgebildet sind.

Gemäß einer weiteren besonders bevorzugten Ausführungsform der Erfindung ist es vorgesehen, dass die Verdrehsicherung ein radial formschlüssig an das Endstück der Hülse ansetzendes Blockierstück umfasst, wobei das Blockierstück mittels einer in die Bohrung im Kolben greifenden Schraube oder mittels eines in die Bohrung im Kolben greifenden Spannstifts am Kolben befestigbar ist. Die Verwendung eines Blockierstücks stellt eine alternative oder zusätzliche und ebenso bevorzugte Möglichkeit zur radialen Fixierung des Kolben-Hülsen-Bauteils in Verschlussposition wie die Verwendung eines unmittelbar in die Bohrungen im Kolben bzw. in der Hülse greifenden Verdrehsicherungsmittels dar.

Bevorzugt ist es vorgesehen, dass mehrere Blockierstücke verwendet werden, um das Kolben-Hülsen-Bauteil in der Verschlussposition zu fixieren. Entsprechend weisen in diesem Fall der Kolben bzw. die Hülse auch mehrere Bohrungen, insbesondere Gewindebohrungen, auf. Je mehr Blockierstücke bzw. Verdrehsicherungsmittel verwendet werden, desto zuverlässiger kann ein unbeabsichtigtes Verdrehen aus der Verschlussposition in die Einführposition vermieden werden.

Gemäß einer weiteren besonders bevorzugten Ausführungsform der Erfindung ist es vorgesehen, dass die Bohrung im Kolben den inneren Bund axial durchsticht und die Bohrung in der Hülse den mindestens einen äußeren Bund axial durchsticht. Da sowohl der innere Bund als auch der äußere Bund vergleichsweise massiv ausgebildet sind, kann somit ein sicherer und zuverlässiger Sitz bei gleichzeitig hoher Belastbarkeit von in die Bohrungen greifenden Verdrehsicherungsmitteln gewährleistet werden.

Gemäß einer besonders bevorzugten Ausführungsform der Erfindung ist es vorgesehen, dass die Schraube oder der Spannstift gleichzeitig in die Bohrung der Hülse und in die Bohrung im Kolben greift. Sowohl eine Schraube als auch ein Spannstift stellen gleichermaßen einfache wie zuverlässige Verdrehsicherungsmittel dar.

Bevorzugt ist es vorgesehen, dass die Verdrehsicherung eine Vielzahl von Schrauben und/oder Spannstiften umfasst. Je mehr Schrauben und/oder Spannstifte bzw. Verdrehsicherungsmittel verwendet werden, desto zuverlässiger kann ein unbeabsichtigtes Verdrehen aus der Verschlussposition in die erste Einführposition vermieden werden.

Weiterhin ist es bevorzugt vorgesehen, dass die axiale Bohrung in der Hülse bzw. die Vielzahl von axialen Bohrungen in der Hülse sich über den mindestens einen äußeren Bund bzw. über das Endstück hinaus axial bis in den Hülsenkörper erstrecken. Dies ermöglicht einen noch zuverlässigeren Sitz der Schraube bzw. des Spannstifts.

Die Erfindung betrifft weiterhin ein mit Druckmittel beaufschlagbares Stellglied gemäß Anspruch 14.

Durch das Zurückgreifen auf die erfindungsgemäße Anordnung für das erfindungsgemäße Stellglied ergeben sich die bereits im Zusammenhang mit der beanspruchten Anordnung genannten Vorteile auch für das Stellglied.

Das Stellglied bzw. die Bestandteile des Stellglieds bestehen vorzugsweise aus Metall, insbesondere aus Stahl. Dies gewährleistet eine vergleichsweise große Robustheit und damit Langlebigkeit des Stellglieds auch unter regelmäßigen und hohen Belastungen. Sämtliche Bestandteile können sowohl spanend als auch nichtspanend hergestellt werden.

Bevorzugt ist ein radialer Innenumfang der Hülse über die gesamte axiale Erstreckung der Hülse konstant. Damit kann das Kolben-Hülsen-Bauteil radial weitgehend spielfrei und axial verschiebbar auf der Schaltstange angeordnet werden.

Vorteilhaft ist der radiale Außenumfang des Kolbens an den radialen Innenumfang des Betätigungszylinders dahingehend angepasst, dass er dem radialen Innenumfang des Betätigungszylinders unter Gewährung eines geringfügigen, zur Gewährleistung der Verschiebbarkeit der Hülse auf der Schaltstange notwendigen Radialspiels, identisch entspricht.

Die Schaltstange weist bevorzugt einen kreisförmigen Radialquerschnitt bzw. radialen Außenumfang auf. Alternativ ist jedoch auch ein ovaler, elliptischer oder kantiger Radialquerschnitt der Schaltstange möglich.

Vorteilhaft ist der radiale Außenumfang der Schaltstange an den radialen Innenumfang der Hülse dahingehend angepasst, dass er dem radialen Innenumfang der Hülse unter Gewährung eines geringfügigen, zur Gewährleistung der Verschiebbarkeit der Hülse auf der Schaltstange notwendigen Radialspiels, identisch entspricht.

Die Axialbewegung des Kolbens ist eine axiale Bewegung auf der Schaltstange, welche über die mechanische axiale Kopplung an die Schaltgabel weitergegeben wird. Die Schaltgabel ihrerseits kann nun z.B. in eine Schaltmuffe eingreifen. Die Schaltmuffe wiederum kann beispielsweise eine Lamellenbremse betätigen, die eine Verteilerfunktion eines Differentialgetriebes freigibt oder sperrt. Somit kann die Differentialsperre eines Differentialgetriebes also über das erfindungsgemäße Stellglied eingerückt bzw. ausgerückt werden. Auf analoge Art und Weise kann mittels des erfindungsgemäßen Stellglieds z.B. auch eine antreibbare Achse eines Kraftfahrzeugs, welches mehrere antreibbare Achsen umfasst, bedarfsweise zugeschaltet bzw. abgeschaltet werden.

Bevorzugt ist es vorgesehen, dass der Kolben mechanisch axial mittels der Hülse mit der Schaltgabel gekoppelt ist. Z.B. kann die Hülse über ein geeignetes Verbindungselement mit der Schaltgabel gekoppelt werden. Dieses Verbindungselement kann beispielsweise als eine Schraubverbindung ausgebildet sein.

Gemäß einer bevorzugten Ausführungsform der Erfindung ist es vorgesehen, dass der Betätigungszylinder an einem ersten axialen Ende eine mittels eines Deckels verschließbare erste Öffnung aufweist ist und an einem zweiten axialen Ende eine zweite Öffnung aufweist, wobei die zweite Öffnung dazu ausgebildet ist, die Hülse unter Gewährleistung einer axialen Verschiebbarkeit in der zweiten Öffnung radial einzufassen.

Die erste Öffnung ist bevorzugt mit dem Deckel verschraubbar. Schraubverbindungen sind im Allgemeinen besonders robust und ermöglichen im Wartungsfall bzw. Reparaturfall ein zerstörungsfreies Lösen bzw. ein zerstörungsfreies Öffnen des Betätigungszylinders.

Der Betätigungszylinder weist bevorzugt, wie beschrieben, an seinen beiden axialen Enden Öffnungen auf. Die erste Öffnung ist weiterhin bevorzugt derart ausgebildet, dass sie eine Aufnahme der Hülse und des Kolbens durch die erste Öffnung in den Betätigungszylinder gewährleistet. Die zweite Öffnung ist weiterhin bevorzugt derart ausgebildet, dass sie, ggf. unter Heranziehen eines Dichtelements, druckmitteldicht gegen die Hülse abgedichtet werden kann.

Eine Betätigung des Stellglieds erfolgt über ein Druckmittel, welches in eine der zwei Kammern des Betätigungszylinders gefördert wird und dort einen Druck bzw. Überdruck erzeugt. Hierbei baut sich in der entsprechenden Kammer also ein Druck auf, der den Kolben in Richtung derjenigen Kammer drängt, welche nicht mit Druck beaufschlagt wird. Somit vergrößert sich also das Volumen derjenigen Kammer, die mit Druck beaufschlagt wird, während sich das Volumen derjenigen Kammer, die nicht mit Druck beaufschlagt wird, im gleichen Maße verkleinert.

Bevorzugt ist ein radialer Innenumfang des Betätigungszylinders kreisförmig ausgebildet. Dies begünstigt vorteilhaft eine gute Abdichtbarkeit mittels Dichtelementen am radialen Innenumfang des Betätigungszylinders hinsichtlich des Druckmittels. Alternativ ist jedoch auch eine Ausbildung des radialen Innenumfangs des Betätigungszylinders mit einem ovalen, elliptischen oder kantigen Innenumfang möglich.

Der Betätigungszylinder weist bevorzugt für jede der zwei Kammern zumindest eine Öffnung auf, durch welche das Druckmittel, das zur Beaufschlagung mit Druck herangezogen wird, zuführbar bzw. abführbar ist.

Der Druck wird bevorzugt mittels einer hierfür geeigneten Pumpvorrichtung erzeugt, z.B. mittels einer elektrisch angetriebenen Drehschieberpumpe. Ebenso ist aber auch jede andere zum Druckaufbau geeignete Pumpvorrichtung erfindungsgemäß möglich.

Zur Bevorratung des Druckmittels wird bevorzugt ein Druckmittelreservoir vorgehalten. Bei dem Druckmittel kann es sich um eine Flüssigkeit, z.B. um ein Hydrauliköl, oder um ein Gas handeln.

Besonders bevorzugt handelt es sich bei dem Druckmittel um Luft. Das Heranziehen von Luft als Druckmittel bringt den Vorteil mit sich, dass kein Druckmittelreservoir vorgehalten werden muss, da die Umgebungsluft jederzeit unbegrenzt zur Verfügung steht und von einer hierfür geeigneten Pumpvorrichtung in unbegrenzter Menge angesaugt und verdichtet werden kann.

Ein bevorzugter maximaler Wert des Drucks für die Beaufschlagung des Kolbens liegt bei 6 x 10⁵ Pa bis 8 x 10⁵ Pa, insbesondere bei 8 x 10⁵ Pa.

Gemäß einer weiteren bevorzugten Ausführungsform der Erfindung ist es vorgesehen, dass das Stellglied weiterhin ein Rückstellelement umfasst, welches das Stellglied in eine Grundstellung drängt. Daraus ergibt sich der Vorteil, dass das Differentialgetriebe je nach Art der Grundstellung als selbstsperrendes Differential oder als offenes Differential ausgebildet sein kann, ohne dass hierzu eine permanente Beaufschlagung des Kolbens mit einem durch ein Druckmittel erzeugten Druck erfolgen muss.

Der Begriff "Grundstellung" beschreibt im Sinne der Erfindung diejenige von zwei möglichen Endpositionen des Kolbens im Betätigungszylinder, in welche der Kolben bzw. das Stellglied vom Rückstellelement gedrängt wird. Die möglichen Endpositionen sind dabei die Positionen mit dem maximalen bzw. mit dem minimalen Kolbenhub im Betätigungszylinder.

Weiterhin wird es durch das Heranziehen eines Rückstellelements ermöglicht, nur eine der zwei Kammern des Betätigungszylinders mit einer oder mehreren Öffnungen zur Zuführung bzw. Abführung von Druckmittel zu versehen. Eine Zuführung bzw. Abführung von Druckmittel für die andere Kammer erübrigt sich vorteilhaft, da der Kolben durch das Rückstellelement bevorzugt ohne weiteres Zutun permanent gegen die mit Druck beaufschlagbare Kammer drängt.

In diesem Fall ist das erfindungsgemäße Stellglied also als einfachwirkendes Stellglied ausgebildet. Sofern eine durch die Druckbeaufschlagung erzeugte Kraft auf den Kolben größer als die durch das Rückstellelement erzeugte Kraft ist, wird der Kolben aus der Grundstellung heraus bewegt und das Stellglied je nach Ausbildung im Sinne eines Einrückens der Differentialsperre oder eines Ausrückens der Differentialsperre betätigt.

Gemäß einer besonders bevorzugten Ausführungsform der Erfindung ist es vorgesehen, dass das Rückstellelement als Schraubenfeder ausgebildet ist. Schraubenfedern lassen sich sowohl auf Druck als auch auf Zug vorspannen, weisen je nach Ausführung eine hohe Elastizität und Rückstellkraft auf und sind zudem vergleichsweise kostengünstig.

Die Erfindung betrifft weiterhin ein Verteilergetriebe mit einer Differentialsperre zum Sperren einer Verteilerfunktion des Verteilergetriebes, wobei die Differentialsperre mittels eines Stellglieds einrückbar und wieder ausrückbar ist. Das erfindungsgemäße Verteilergetriebe zeichnet sich dadurch aus, dass das Stellglied ein erfindungsgemäßes Stellglied ist. Die im Zusammenhang mit dem erfindungsgemäßen Stellglied beschriebenen Vorteile ergeben sich daher auch für das erfindungsgemäße Verteilergetriebe.

Nachfolgend wird die Erfindung anhand von in den Figuren dargestellten Ausführungsformen beispielhaft erläutert.

Es zeigen:
- Fig. 1: schematisch den Aufbau eines bekannten Kolben-Hülsen-Bauteils,
- Fig. 2: schematisch eine mögliche erste Ausbildungsform einer erfindungsgemäßen Anordnung,
- Fig. 3: schematisch eine mögliche zweite Ausbildungsform einer erfindungsgemäßen Anordnung,
- Fig. 4: schematisch eine mögliche Ausbildungsform eines erfindungsgemäßen Stellglieds und
- Fig. 5: mögliche Ausbildungsformen des inneren Bunds und des mindestens einen äußeren Bunds.

Gleiche Gegenstände, Funktionseinheiten und vergleichbare Komponenten sind figurenübergreifend mit den gleichen Bezugszeichen bezeichnet. Diese Gegenstände, Funktionseinheiten und vergleichbaren Komponenten sind hinsichtlich ihrer technischen Merkmale identisch ausgeführt, sofern sich aus der Beschreibung nicht explizit oder implizit etwas anderes ergibt.

Fig. 1 zeigt schematisch den Aufbau eines bekannten Kolben-Hülsen-Bauteils 101 in einem nur ansatzweise dargestellten Stellglied 111. Das bekannte Kolben-Hülsen-Bauteil 101 besteht aus einem Kolben 102 und einer Hülse 103, welche in einem Betätigungszylinder 104 angeordnet sind. Der Betätigungszylinder 104 ist durch einen Deckel 105 verschlossen. Der Kolben 102 unterteilt den Betätigungszylinder 104 in zwei Kammern 104a und 104b. Wie zu sehen ist, ist der Kolben 102 an einem ersten axialen Ende der Hülse 103 radial umlaufend angeordnet. Um den Sitz des Kolbens 102 auf der Hülse 103 zu gewährleisten, ist er auf einer Seite formschlüssig durch eine radiale Umfangszunahme 106 der Hülse 103 abgestützt und auf der anderen Seite durch einen Sicherungsring 107 abgestützt. Weiterhin weist der Kolben 102 an seinem radialen Außenumfang ein Dichtelement 108 auf und an seinem radialen Innenumfang ein Dichtelement 109. Die Hülse 103 ist axial verschiebbar auf einer Schaltstange 110 angeordnet. Bei hohen Belastungen bzw. bei Beaufschlagungen mit hohem Druck in der Kammer 104a kann es vorkommen, dass der Sicherungsring 107 den Belastungen nicht mehr standhält und durch den Kolben 102 von der Hülse 103 gestemmt wird. Dies stellt einen Ausfall des Stellglieds 111 dar und macht eine aufwändige Reparatur notwendig.

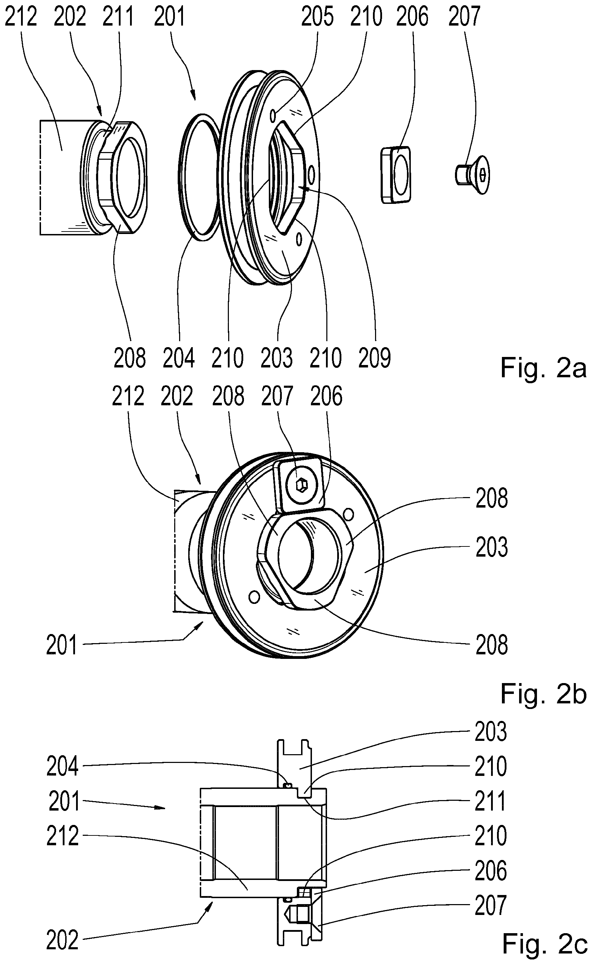

Fig. 2a zeigt schematisch eine mögliche erste Ausbildungsform einer erfindungsgemäßen Anordnung mit einem Kolben-Hülsen-Bauteil 201 in Explosionsdarstellung. Das dargestellte Kolben-Hülsen-Bauteil 201 umfasst eine rohrartig ausgebildete Hülse 202, einen scheibenartig ausgebildeten Kolben 203, ein als O-Ring ausgebildetes Dichtelement 204, sowie eine Verdrehsicherung 205, 206, 207, welche beispielsgemäß aus einer axial verlaufenden Gewindebohrung 205 im Kolben 203, einem Blockierstück 206 und einer Schraube 207 besteht. Der Kolben 203 weist eine den Kolben 203 axial durchdringende Öffnung 209 auf, welche durch einen inneren Bund 210 von drei Seiten axial teilweise bedeckt wird. Der innere Bund 210 dient als axiales Formschlusselement eines Bajonettverschlusses bei der Montage des erfindungsgemäßen Kolben-Hülsen-Bauteils 201. Wie weiterhin zu sehen ist, ist die Hülse 202 hohl, so dass sie eine in Fig. 2 nicht gezeigte Schaltstange 110 unter Gewährleistung einer axialen Verschiebbarkeit auf der Schaltstange (110) radial einfassen kann. An einem dem Kolben 203 zugewandten Endstück der Hülse 202 weist die Hülse 202 außerdem einen äußeren Bund 208 auf, welcher das Endstück der Hülse 202 radial teilweise überragt und bei der Montage des erfindungsgemäßen Kolben-Hülsen-Bauteils 201 ebenfalls als axiales Formschlusselement des Bajonettverschlusses dient. Der äußere Bund 208 ist dabei derart ausgebildet, dass er in einer Einführposition den inneren Bund 210 zu einem vollständigen axialen Ring ergänzt. An den äußeren Bund 208 unmittelbar angrenzend weist die Hülse 202 eine Ringnut 211 auf, welche den äußeren Bund 208 von einem Hülsenkörper 212 trennt. Die Ringnut 211 ermöglicht beispielsgemäß ein Führen des äußeren Bunds 208 der Hülse 202 durch die Öffnung 209 hindurch, da der Hülsenkörper 212 im Ausführungsbeispiel der Fig. 2 durch seine Umfangszunahme 216 gegenüber der Ringnut 211 nicht durch die Öffnung 209 geführt werden kann. Somit wird durch die Umfangszunahme 216 des Hülsenkörpers 212 die maximale Einführtiefe der Hülse 202 in den Kolben 203 bzw. in die Öffnung 209 begrenzt. Gleichzeitig dient diese Radialumfangszunahme des Hülsenkörpers 212 als weiteres axiales Formschlusselement des Bajonettverschlusses. Die Fig. 2a zeigt das Kolben-Hülsen-Bauteil 201 in Verschlussposition, d.h. in einer Verdrehwinkellage bzw. Verdrehwinkelorientierung des Kolbens 203 zur Hülse 202, in welcher die Hülse 202 im Kolben 203 fixiert und nicht durch die Öffnung 209 des Kolbens 203 führbar ist. Im gezeigten Beispiel der Fig. 2a muss entweder die Hülse 202 oder der Kolben 203 um 60° um die axiale Achse verdreht werden, um von der gezeigten Verschlussposition in die Einführposition zu gelangen, welche ein Führen des Endstücks der Hülse 202 durch die Öffnung 209 des Kolbens 203 ermöglicht und somit erst eine Montage bzw. Demontage des Kolben-Hülsen-Bauteils gestattet.

Fig. 2b zeigt schematisch die mögliche erste Ausbildungsform der erfindungsgemäßen Anordnung mit einem Kolben-Hülsen-Bauteil 201 im montierten Zustand. Wie zu sehen ist, ist der Kolben 203 radial umlaufend auf dem Endstück der Hülse 202 angeordnet, wobei der äußere Bund 208 den inneren Bund 210 axial überlagert, so dass eine axial formschlüssige Verbindung der Kolbens 203 mit der Hülse 202 besteht. Dies stellt wie in Fig. 2a die Verschlussposition dar. Das Blockierstück 206 ist mittels der Schraube 207, welche in die Gewindebohrung 205 greift, am Kolben befestigt. Dabei setzt das Blockierstück 206 radial formschlüssig an das Endstück der Hülse 202 bzw. an den äußeren Bund 208 an. Somit kann das Kolben-Hülsen-Element 201 die Verschlussposition nicht verlassen, was einen sicheren Sitz des Kolbens 203 auf der Hülse 202 gewährleistet.

Fig. 2c veranschaulicht die in Fig. 2b gezeigte erste Ausbildungsform der erfindungsgemäßen Anordnung mit einem Kolben-Hülsen-Bauteil 201 im montierten Zustand mit einer Längsschnittdarstellung. Die Längsschnittdarstellung zeigt einerseits den Sitz des O-Rings 204 im montierten Zustand des Kolben-Hülsen-Bauteils 201 und verdeutlicht andererseits die Fixierung des Endstücks der Hülse 202 im Kolben 203. Wie zu sehen ist, besteht eine axial formschlüssige Verbindung zwischen der Hülse 202 und dem Kolben 203, da der innere Bund 210 zwischen dem äußeren Bund 208 und der Radialumfangszunahme der Hülse 202 bzw. dem Hülsenkörper 212 eingefasst ist. Würde man das Blockierstück 206 sowie die Schraube 207 entfernen und den Kolben um 60° verdrehen, so dass das Kolben-Hülsen-Element 201 von der zweiten Radialwinkelausrichtung in die erste Radialwinkelausrichtung gebracht würde, so wäre der innere Bund 210 nicht mehr zwischen dem äußeren Bund 208 und der Radialumfangszunahme der Hülse 202 eingefasst, womit der Kolben 203 in der Darstellung der Fig. 2c nach rechts abgezogen werden könnte.

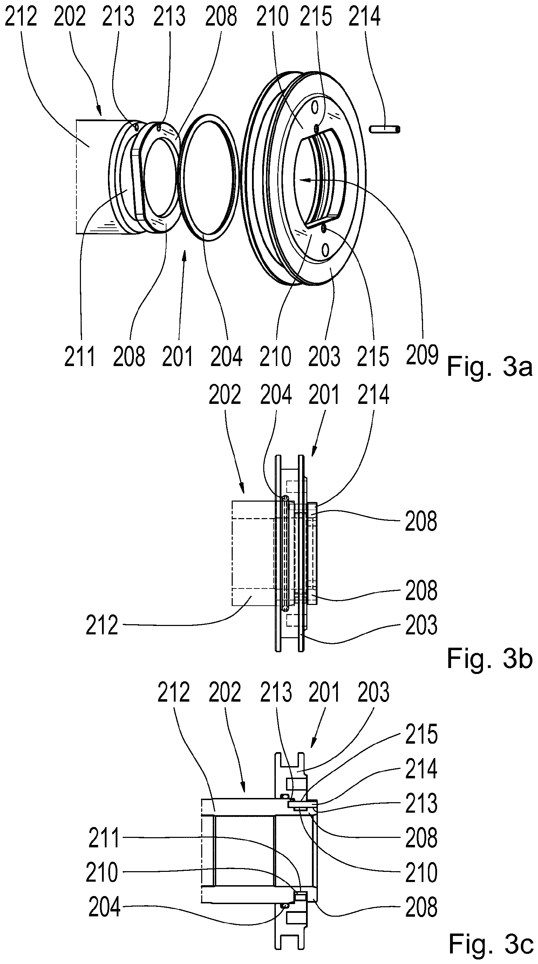

Fig. 3a zeigt schematisch eine mögliche zweite Ausbildungsform einer erfindungsgemäßen Anordnung in Explosionsdarstellung. Das in Fig. 3a dargestellte Kolben-Hülsen-Bauteil 201 umfasst eine rohrartig ausgebildete Hülse 202, einen scheibenartig ausgebildeten Kolben 203, ein als O-Ring ausgebildetes Dichtelement 204, sowie eine Verdrehsicherung 213, 214, 215, welche beispielsgemäß aus einer den inneren Bund 210 axial durchstechenden Bohrung 215 im Kolben, einer den äußeren Bund 208 axial durchstechenden und sich in den Hülsenkörper 212 fortsetzenden Bohrung 213 sowie einem Spannstift 214 besteht. Des Weiteren entspricht das in Fig. 3 gezeigte Kolben-Hülsen-Element 201 dem bereits aus der Fig. 2 bekannten Kolben-Hülsen-Element 201. Auch das in Fig. 3a gezeigte Kolben-Hülsen-Element 201 ist in der Verschlussposition dargestellt.

Fig. 3b zeigt schematisch die beispielhafte zweite Ausbildungsform der erfindungsgemäßen Anordnung mit einem Kolben-Hülsen-Bauteil 201 im montierten Zustand in einer Darstellung mit verdeckten Kanten, um die Funktionsweise der Verdrehsicherung 213, 214, 215 zu veranschaulichen. Außerdem zu sehen ist der Sitz des O-Rings 204 zwischen dem Hülsenkörper 212 und dem Kolben 203. Das Kolben-Hülsen-Element 201 befindet sich in der Verschlussposition, d.h., dass der Kolben 203 auf der Hülse 202 durch den Bajonettverschluss axial fixiert ist, da der äußere Bund 208 den inneren Bund 210 axial überlagert, so dass eine axial formschlüssige Verbindung der Kolbens 203 mit der Hülse 202 besteht. Der Spannstift 214 greift gleichzeitig durch die Bohrung 215 des Kolbens 203 und durch die Bohrung 213 der Hülse 202, wobei die Bohrung 213 nicht nur den äußeren Bund 208 durchsticht sondern sich auch im Hülsenkörper 212 fortsetzt, was die gezeigte Verdrehsicherung 213, 214, 215 vergleichsweise robuster macht. Da der Spannstift 214 somit ein Verdrehen des Kolben-HülsenElements 201 aus der Verschlussposition in die Einführposition verhindert, ist ein sicherer und belastbarer Sitz des Kolbens 203 auf der Hülse 202 gewährleistet. Ein Entfernen des Kolbens 203 von der Hülse 202 ist aufgrund der spezifischen Ausbildung des inneren Bunds 210 und des äußeren Bunds 208 als Formschlusselemente des Bajonettverschlusses ausschließlich in der Einführposition möglich.

Fig. 3c veranschaulicht die in Fig. 3b gezeigte zweite Ausbildungsform der erfindungsgemäßen Anordnung mit einem Kolben-Hülsen-Bauteil 201 im montierten Zustand mit einer Längsschnittdarstellung. Die Längsschnittdarstellung veranschaulicht einerseits nochmals den Sitz des O-Rings 204 im montierten Zustand des Kolben-Hülsen-Bauteils 201 und verdeutlicht andererseits die Fixierung des Endstücks der Hülse 202 im Kolben 203. Wie zu sehen ist, besteht in Form des Bajonettverschlusses eine axial formschlüssige Verbindung zwischen der Hülse 202 und dem Kolben 203, da der innere Bund 210 zwischen dem äußeren Bund 208 und der Umfangszunahme 216 des Hülsenkörpers 212 eingefasst ist. Würde man den Spannstift 214 aus den Bohrungen 213 und 215 entfernen - was in der Praxis jedoch schwierig wäre - und den Kolben um 90° verdrehen, so dass das Kolben-Hülsen-Element 201 von der Verschlussposition in die Einführposition gebracht würde, so wäre der innere Bund 210 nicht mehr zwischen dem äußeren Bund 208 und der Umfangszunahme 216 des Hülsenkörpers 212 eingefasst, womit der Kolben 203 in der Darstellung der Fig. 3c nach rechts abgezogen werden könnte.

Fig. 4 zeigt schematisch eine mögliche erste Ausbildungsform eines erfindungsgemäßen Stellglieds 401. Das Stellglied 401 umfasst einen Betätigungszylinder 104 mit einem Deckel 105, ein erfindungsgemäßes Kolben-Hülsen-Bauteil 201, eine Schaltstange 110, eine Schaltgabel 404 und ein Rückstellelement 406. Das Kolben-Hülsen-Bauteil 201 besteht aus einem Kolben 203 und einer Hülse 202, wobei der Kolben 203 an einem Endstück der Hülse 202 radial umlaufend angeordnet ist. Dabei ist das Kolben-Hülsen-Bauteil 201 mittels einer Verdrehsicherung 213, 214, 215 gegen ein unbeabsichtigtes Verdrehen aus der Verschlussposition in die Einführposition gesichert. Die Verdrehsicherung 213, 214, 215 besteht beispielsgemäß aus einer den inneren Bund 210 axial durchstechenden Bohrung 215 im Kolben, einer den äußeren Bund 208 axial durchstechenden und sich in den Hülsenkörper 212 fortsetzenden Bohrung 213 sowie aus einer Madenschraube 214. Beispielsgemäß ist das Kolben-Hülsen-Bauteil 201 mittels Kaltverformen aus Stahl hergestellt. Der Kolben 203 unterteilt den Betätigungszylinder 104 in zwei Kammern 104a und 104b. Durch eine Öffnung 407 kann Druckmittel in die Kammer 104a gefördert werden, so dass der Kolben 203 von der Seite der Kammer 104a her mit Druck beaufschlagt wird. Als Druckmittel wird beispielsgemäß Luft verwendet, so dass kein Druckmittelreservoir zur Bevorratung des Stellglieds 401 mit Druckmittel vorgehalten werden muss. Stattdessen wird bedarfsweise Umgebungsluft angesaugt und durch die Öffnung 407 in die Kammer 104a gefördert. Dazu wird eine nicht dargestellte, elektrisch angetriebene Drehschieberpumpe verwendet. Durch die Öffnung 407 kann die in die Kammer 104a geförderte Luft auch wieder abgelassen werden. An einem dem Kolben 203 abgewandten Ende der Hülse 202 ist ein Verbindungselement 408 angeordnet. Gemäß dem gezeigten Ausführungsbeispiel ist das Verbindungselement 408 als Schraubengewindeabschnitt mit einem Außengewinde ausgebildet. Das Verbindungselement 408 ist mittels Verschrauben mit einem Verbindungselement 412 der Schaltgabel 404 verbunden. Das Verbindungselement 412 der Schaltgabel 404 ist dabei entsprechend als Schraubengewindeabschnitt mit einem Innengewinde ausgebildet. Die Schaltgabel 404 weist einen Anschlagring 417 auf. Das Kolben-Hülsen-Bauteil 201 ist derart ausgebildet, dass es radial im Wesentlichen spielfrei aber axial verschiebbar auf der Schaltstange 110 angeordnet werden kann. Die Schraubenfeder 406 ist auf Druck vorgespannt und stützt sich einerseits, wie beschrieben, am Anschlagring 417 der Schaltgabel 404 ab und andererseits an einer axialen Außenseite des Betätigungszylinders 104. Durch die Vorspannung der Schraubenfeder 406 wird der Kolben 203 bzw. das Kolben-Hülsen-Bauteil 201 im drucklosen Zustand in eine Grundstellung gedrängt, bei der der Kolben 203 maximal vom Deckel 105 entfernt ist. Bei einer Beaufschlagung des Kolbens 105 von der Seite der Kammer 104a her mit Druck wird der Kolben 203 gegen die Vorspannung der Schraubenfeder 406 zum Deckel 105 gedrängt. Da das Kolben-Hülsen-Bauteil 201 mechanisch starr mit der Schaltgabel 404 gekoppelt ist, folgt die Schaltgabel 404 jeder Axialbewegung des Kolbens 203. Da die Schaltgabel 404 wiederum in eine nicht dargestellte Schaltmuffe eingreift, kann sie über diese eine Differentialsperre einrücken bzw. ausrücken. Die Schaltgabel 404 weist außerdem eine zylindrische Ausnehmung 413 auf, in welcher sich ein Anschlagring 414 der Schaltstange 110 abstützt. Ein Zugang zur zylindrischen Ausnehmung 413 ist dabei durch die Verbindung der Schaltgabel 404 mittels des Verbindungselements 412 der Schaltgabel 404 mit dem Verbindungselement 408 der Hülse 202 derart abgedichtet, dass der Anschlagring 414 der Schaltstange 110 die zylindrische Ausnehmung 413 nicht mehr verlassen kann. Eine Axialbewegung des Anschlagrings 414 in der zylindrischen Ausnehmung 413 ist jedoch möglich. Die Schaltstange 110 weist weiterhin ein Justiergewinde 415 auf, mittels dessen sie in ein Gegengewinde 416 im Deckel 105 eingedreht ist. Über die Endrehtiefe der Schaltstange 110 in das Gegengewinde 416 können die Grundstellung des Kolbens 203 im Betätigungszylinder 104, die Endpositionen des Kolbenhubs Betätigungszylinder 104 sowie die Vorspannung der Schraubenfeder 406 eingestellt werden.

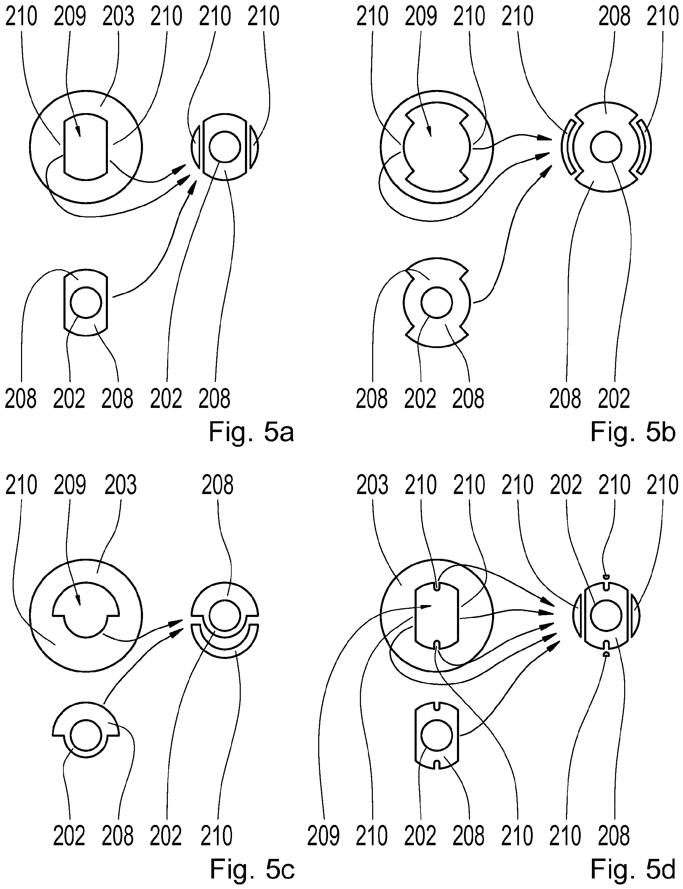

Fig. 5 zeigt beispielhaft mögliche Ausbildungsformen des inneren Bunds 210 und jeweils zugehörige Ausbildungsformen des mindestens einen äußeren Bunds 208 in einer axialen Querschnittsansicht. Die Ausrichtung bzw. die Verdrehwinkellage der gezeigten Kolben 203 und der gezeigten Hülsen 202 entspricht dabei jeweils der Einführposition, welche ein Führen des Endstücks der Hülse 202 durch die Öffnung 209 des Kolbens 203 ermöglicht.

Fig. 5a zeigt eine erste mögliche Ausbildungsform des inneren Bunds 210 und des mindestens einen äußeren Bunds 208. Wie zu sehen ist, ist die Öffnung 209 des Kolbens 203 durch zwei kreisabschnittsförmige Vorsprünge, welche den inneren Bund 210 darstellen und als axiale Formschlusselemente eines Bajonettverschlusses wirken, radial teilweise bedeckt. Die Hülse 202 weist ebenfalls zwei Vorsprünge auf, welche den äußeren Bund 208 darstellen und als axiale Formschlusselemente eines Bajonettverschlusses wirken. Wie weiterhin zu sehen ist, ergänzt der äußere Bund 208 den inneren Bund 210 zu einem vollständigen axialen Ring (angedeutet durch Pfeile).

Fig. 5b zeigt eine zweite mögliche Ausbildungsform des inneren Bunds 210 und des mindestens einen äußeren Bunds 208. Gemäß diesem Ausführungsbeispiel ist die Öffnung 209 des Kolbens 203 durch zwei ringabschnittsförmige Vorsprünge, welche den inneren Bund 210 darstellen und als axiale Formschlusselemente wirken, radial teilweise bedeckt. Die Hülse 202 weist zwei entsprechende Vorsprünge auf, welche den äußeren Bund 208 darstellen und den inneren Bund 210 zu einem vollständigen axialen Ring ergänzen (angedeutet durch Pfeile).

Fig. 5c zeigt eine dritte mögliche Ausbildungsform des inneren Bunds 210 und des mindestens einen äußeren Bunds 208. Wie zu sehen ist, ist die Öffnung 209 des Kolbens 203 beispielsgemäß durch einen einzelnen ringabschnittsförmige Vorsprung, welcher den inneren Bund 210 darstellt, radial teilweise bedeckt. Die Hülse 202 weist entsprechend ebenfalls einen einzelnen Vorsprung auf, welcher den äußeren Bund 208 darstellt und den inneren Bund 210 zu einem vollständigen axialen Ring ergänzt (angedeutet durch Pfeile).

Fig. 5d schließlich zeigt eine vierte mögliche Ausbildungsform des inneren Bunds 210 und des mindestens einen äußeren Bunds 208. Gemäß dem Ausführungsbeispiel der Fig. 6d ist die Öffnung 209 des Kolbens 203 durch zwei kreisabschnittsförmige Vorsprünge und zwei Nasen, welche den inneren Bund 210 darstellen und jeweils als axiale Formschlusselemente wirken, radial teilweise bedeckt. Die Hülse 202 weist zwei entsprechende Vorsprünge bzw. Aussparungen auf, welche den äußeren Bund 208 darstellen und den inneren Bund 210 auch in diesem Fall zu einem vollständigen axialen Ring ergänzen (angedeutet durch Pfeile).

### Bezugszeichen

- 101: Kolben-Hülsen-Bauteil
- 102: Kolben des Kolben-Hülsen-Bauteils
- 103: Hülse des Kolben-Hülsen-Bauteils
- 104: Betätigungszylinder
- 104a, 104b: Kammern des Betätigungszylinders
- 105: Deckel des Betätigungszylinders
- 106: Umfangszunahme der Hülse
- 107: Sicherungsring
- 108, 109: Dichtelement
- 110: Schaltstange
- 111: Stellglied
- 201: Kolben-Hülsen-Bauteil
- 202: Hülse des Kolben-Hülsen-Bauteils
- 203: Kolben des Kolben-Hülsen-Bauteils
- 204: Dichtelement
- 205: Gewindebohrung
- 206: Blockierstück
- 207: Schraube
- 208: äußerer Bund
- 209: Öffnung des Kolbens
- 210: innerer Bund
- 211: Ringnut
- 212: Hülsenkörper
- 213: Bohrung
- 214: Spannstift
- 215: Bohrung
- 216: Umfangszunahme des Hülsenkörpers
- 401: Stellglied
- 404: Schaltgabel
- 406: Rückstellelement
- 407: Öffnung
- 408: Verbindungselement
- 412: Verbindungselement
- 413: Ausnehmung
- 414: Anschlagring
- 415: Justiergewinde
- 416: Gegengewinde
- 417: Anschlagring
- 501: Verteilergetriebe
- 502: Hebelarm
- 503: Schaltmuffe
- 504: Differentialsperre

## Patentansprüche

1. Anordnung bestehend aus einer Schaltstange (110) und einem Kolben-Hülsen-Bauteil (201) für ein mit Druckmittel beaufschlagbares Stellglied (401), wobei das Kolben-Hülsen-Bauteil (201) einen Kolben (203) und eine Hülse (202) umfasst, wobei die Hülse (202) rohrartig derart ausgebildet ist, dass sie die Schaltstange (110) unter Gewährleistung einer axialen Verschiebbarkeit auf der Schaltstange (110) radial einfassen kann und wobei der Kolben (203) scheibenartig und mit einer den Kolben (203) axial durchdringenden Öffnung (209) ausgebildet ist,
**dadurch gekennzeichnet, dass** ein Endstück der Hülse (202) und die Öffnung (209) des Kolbens (203) derart ausgebildet sind, dass sie miteinander als Bajonettverschluss wirken.

2. Anordnung nach Anspruch 1, **dadurch gekennzeichnet, dass** der Kolben (203) einen die Öffnung (209) axial teilweise bedeckenden inneren Bund (210) als axiales Formschlusselement des Bajonettverschlusses aufweist

3. Anordnung nach Anspruch 2, **dadurch gekennzeichnet, dass** die Hülse (202) mindestens einen das Endstück radial teilweise überragenden äußeren Bund (208) sowie eine durch eine Ringnut (211) vom einzelnen äußeren Bund (208) getrennte Radialumfangszunahme der Hülse (202) als axiale Formschlusselemente des Bajonettverschlusses aufweist.

4. Anordnung nach mindestens einem der Ansprüche 2 und 3,
**dadurch gekennzeichnet, dass** in einer Verschlussposition des Bajonettverschlusses der innere Bund (210) und die äußeren Bunde (208) oder der innere Bund (210) und der einzelne äußere Bund (208) axial überlagert sind, so dass eine axial formschlüssige Verbindung des Kolbens (203) mit der Hülse (202) besteht.

5. Anordnung nach mindestens einem der Ansprüche 1 bis 4,
**dadurch gekennzeichnet, dass** der innere Bund (210) kreisabschnittsförmig oder ringabschnittsförmig ausgebildet ist und dass mindestens ein äußerer Bund (208) derart ausgebildet ist, dass er in einer Einführposition des Bajonettverschlusses den inneren Bund (210) zu einem vollständigen axialen Ring ergänzt.

6. Anordnung nach mindestens einem der Ansprüche 1 bis 5,
**dadurch gekennzeichnet, dass** der innere Bund (210) die Öffnung (209) in einem Verdrehwinkelbereich von höchstens 180° bedeckt und/oder dass der mindestens eine äußere Bund (210) das Endstück in einem Verdrehwinkelbereich von höchstens 180° überragt.

7. Anordnung nach mindestens einem der Ansprüche 1 bis 6,
**dadurch gekennzeichnet, dass** das Kolben-Hülsen-Bauteil (210) weiterhin eine Verdrehsicherung (205, 206, 207, 213, 214, 215) umfasst, wobei die Verdrehsicherung (205, 206, 207, 213, 214, 215) dazu ausgebildet ist, ein Verdrehen aus der Verschlussposition in die Einführposition zu blockieren.

8. Anordnung nach Anspruch7, **dadurch gekennzeichnet, dass** die Verdrehsicherung (205, 206, 207, 213, 214, 215) eine axial verlaufende Bohrung (205, 215) im Kolben (203) umfasst.

9. Anordnung nach Anspruch 8, **dadurch gekennzeichnet, dass** die Verdrehsicherung (205, 206, 207, 213, 214, 215) weiterhin eine axial verlaufende Bohrung (213) in der Hülse umfasst, wobei die Bohrung (205, 215) im Kolben (203) und die Bohrung (213) in der Hülse (202) in der Verschlussposition fluchtend sind.

10. Anordnung nach mindestens einem der Ansprüche 8 und 9,
**dadurch gekennzeichnet, dass** die Bohrung (205, 215) im Kolben (203) und/oder die Bohrung (213) in der Hülse (202) als Gewindebohrung (205) ausgebildet ist.

11. Anordnung nach mindestens einem der Ansprüche 7 bis 10,
**dadurch gekennzeichnet, dass** die Verdrehsicherung (205, 206, 207, 213, 214, 215) ein radial formschlüssig an das Endstück der Hülse (202) ansetzendes Blockierstück (206) umfasst, wobei das Blockierstück (206) mittels einer in die Bohrung (205, 215) im Kolben (203) greifenden Schraube (207) oder mittels eines in die Bohrung (205, 215) im Kolben (203) greifenden Spannstifts (214) am Kolben (203) befestigbar ist.

12. Anordnung nach mindestens einem der Ansprüche 7 bis 10,
**dadurch gekennzeichnet, dass** die Bohrung (205, 215) im Kolben (203) den inneren Bund (210) axial durchsticht und die Bohrung (213) in der Hülse (202) den mindestens einen äußeren Bund (208) axial durchsticht.

13. Anordnung nach Anspruch 12, **dadurch gekennzeichnet, dass** die Schraube (207) oder der Spannstift (214) gleichzeitig in die Bohrung (213) in der Hülse (202) und in die Bohrung (205, 215) im Kolben (203) greift.

14. Mit Druckmittel beaufschlagbares Stellglied (401), umfassend einen Betätigungszylinder (104), eine Schaltgabel (404) und eine Anordnung gemäß einem der Ansprüche 1 bis 13, wobei der Betätigungszylinder (104) als das Kolben-Hülsen-Bauteil (201) und die Schaltstange (110) zumindest teilweise radial einfassender Hohlkörper ausgebildet ist, wobei der Kolben (203) des Kolben-Hülsen-Bauteils (201) den Betätigungszylinder (104) druckmitteldicht in zwei Kammern (104a, 104b) unterteilt, wobei der Kolben (203) axial verschiebbar im Betätigungszylinder (104) angeordnet ist, und wobei der Kolben (203) mechanisch axial derart mit der Schaltgabel (404) gekoppelt ist, dass eine Axialbewegung des Kolbens (203) eine identische Axialbewegung der Schaltgabel (404) verursacht.

15. Stellglied (401) nach Anspruch 14, **dadurch gekennzeichnet, dass** der Betätigungszylinder (104) an einem ersten axialen Ende eine mittels eines Deckels (105) verschließbare erste Öffnung aufweist ist und an einem zweiten axialen Ende eine zweite Öffnung aufweist, wobei die zweite Öffnung dazu ausgebildet ist, die Hülse (202) unter Gewährleistung einer axialen Verschiebbarkeit in der zweiten Öffnung radial einzufassen.

16. Stellglied (401) nach mindestens einem der Ansprüche 14 bis 15,
**dadurch gekennzeichnet, dass** das Stellglied (401) weiterhin ein Rückstellelement (406) umfasst, welches das Stellglied (401) in eine Grundstellung drängt.

17. Verteilergetriebe (501) mit einer Differentialsperre (504) zum Sperren einer Verteilerfunktion des Verteilergetriebes (504), wobei die Differentialsperre (504) mittels eines Stellglieds (401) einrückbar und wieder ausrückbar ist,
**dadurch gekennzeichnet, dass** das Stellglied (401) ein Stellglied (401) nach mindestens einem der Ansprüche 14 bis 16 ist.

## Claims

1. Arrangement consisting of a shift rod (110) and a piston-sleeve component (201) for an actuator (401) which can be charged with pressure medium, wherein the piston-sleeve component (201) comprises a piston (203) and a sleeve (202), wherein the sleeve (202) is designed to be tubular in such a way that it can radially enclose the shift rod (110) while ensuring axial displaceability on the shift rod (110), and wherein the piston (203) is disc-like and formed with an opening (209) which axially penetrates the piston (203),
**characterized in that** an end piece of the sleeve (202) and the opening (209) of the piston (203) are formed in such a way that they together act as a bayonet closure.

2. Arrangement according to Claim 1, **characterized in that** the piston (203) has an inner collar (210), which axially partially covers the opening (209), as axial form-fitting element of the bayonet closure.

3. Arrangement according to Claim 2, **characterized in that** the sleeve (202) has at least one outer collar (208), which partially projects radially beyond the endpiece, and a radial circumferential enlargement of the sleeve (202), said enlargement being separated from the individual outer collar (208) by an annular groove (211), as axial form-fitting elements of the bayonet closure.

4. Arrangement according to at least one of Claims 2 and 3,
**characterized in that**, in a closure position of the bayonet closure, the inner collar (210) and the outer collars (208) or the inner collar (210) and the individual outer collar (208) are axially superimposed, resulting in an axial form-fitting connection of the piston (203) to the sleeve (202).

5. Arrangement according to at least one of Claims 1 to 4,
**characterized in that** the inner collar (210) is in the form of a circular segment or ring segment, and **in that** at least one outer collar (208) is formed in such a way that, in an insertion position of the bayonet closure, it supplements the inner collar (210) to form a complete axial ring.

6. Arrangement according to at least one of Claims 1 to 5,
**characterized in that** the inner collar (210) covers the opening (209) in an angle-of-rotation range of at most 180°, and/or **in that** the at least one outer collar (210) projects beyond the end piece in an angle-of-rotation range of at most 180°.

7. Arrangement according to at least one of Claims 1 to 6,
**characterized in that** the piston-sleeve component (210) further comprises an anti-rotational safeguard (205, 206, 207, 213, 214, 215), wherein the anti-rotational safeguard (205, 206, 207, 213, 214, 215) is designed to block a rotation from the closure position into the insertion position.

8. Arrangement according to Claim 7, **characterized in that** the anti-rotational safeguard (205, 206, 207, 213, 214, 215) comprises an axially extending bore (205, 215) in the piston (203).

9. Arrangement according to Claim 8, **characterized in that** the anti-rotational safeguard (205, 206, 207, 213, 214, 215) further comprises an axial extending bore (213) in the sleeve, wherein the bore (205, 215) in the piston (203) and the bore (213) in the sleeve (202) are in alignment in the closure position.

10. Arrangement according to at least one of Claims 8 and 9,
**characterized in that** the bore (205, 215) in the piston (203) and/or the bore (213) in the sleeve (202) take/takes the form of a threaded bore (205).

11. Arrangement according to at least one of Claims 7 to 10,
**characterized in that** the anti-rotational safeguard (205, 206, 207, 213, 214, 215) comprises a blocking piece (206) fitted to the end piece of the sleeve (202) in a radially form-fitting manner, wherein the blocking piece (206) can be fastened to the piston (203) by means of a screw (207) which engages in the bore (205, 215) in the piston (203) or by means of a clamping pin (214) which engages in the bore (205, 215) in the piston (203).

12. Arrangement according to at least one of Claims 7 to 10,
**characterized in that** the bore (205, 215) in the piston (203) axially penetrates the inner collar (210), and the bore (213) in the sleeve (202) axially penetrates the at least one outer collar (208) .

13. Arrangement according to Claim 12, **characterized in that** the screw (207) or the clamping pin (214) simultaneously engages in the bore (213) in the sleeve (202) and in the bore (205, 215) in the piston (203) .

14. Actuator (401) which can be charged with pressure medium, comprising an actuating cylinder (104), a shift fork (404) and an arrangement according to one of Claims 1 to 13, wherein the actuating cylinder (104) is designed as a hollow body which at least partially radially encloses the piston-sleeve component (201) and the shift rod (110), wherein the piston (203) of the piston-sleeve component (201) subdivides the actuating cylinder (104) into two chambers (104a, 104b) in a pressure-medium-tight manner, wherein the piston (203) is arranged in the actuating cylinder (104) in an axially displaceable manner, and wherein the piston (203) is mechanically axially coupled to the shift fork (404) in such a way that an axial movement of the piston (203) causes an identical axial movement of the shift fork (404) .

15. Actuator (401) according to Claim 14, **characterized in that** the actuating cylinder (104) has, at a first axial end, a first opening which can be closed by means of a cover (105), and has a second opening at a second axial end, wherein the second opening is designed to radially enclose the sleeve (202) while ensuring axial displaceability in the second opening.

16. Actuator (401) according to at least one of Claims 14 and 15,
**characterized in that** the actuator (401) further comprises a restoring element (406) which purges the actuator (401) into a basic position.

17. Transfer case (501) having a differential lock (504) for locking a transfer function of the transfer case (504), wherein the differential lock (504) can be engaged by means of an actuator (401) and disengaged again,
**characterized in that** the actuator (401) is an actuator (401) according to at least one of Claims 14 to 16.

## Revendications

1. Arrangement composé d'une tringle de manœuvre (110) et d'un composant à piston et douille (201) pour un actionneur (401) qui peut être chargé avec un fluide sous pression, le composant à piston et douille (201) comportant un piston (203) et une douille (202), la douille (202) étant configurée à la manière d'un tube de telle sorte qu'elle peut border la tringle de manœuvre (110) dans le sens radial en garantissant une aptitude au coulissement axial sur la tringle de manœuvre (110) et le piston (203) étant configuré à la manière d'un disque et avec une ouverture (209) qui traverse le piston (203) dans le sens axial,
**caractérisé en ce qu'**un embout de la douille (202) et l'ouverture (209) du piston (203) sont configurés de telle sorte qu'ils produisent ensemble un accouplement à baïonnette.

2. Arrangement selon la revendication 1, **caractérisé en ce que** le piston (203) possède un épaulement intérieur (210) qui recouvre au moins partiellement l'ouverture (209) dans le sens axial en tant qu'élément de complémentarité de formes axial de l'accouplement à baïonnette.

3. Arrangement selon la revendication 2, **caractérisé en ce que** la douille (202) possède au moins un épaulement extérieur (208) qui fait partiellement saillie de l'embout dans le sens radial ainsi qu'un accroissement périphérique radial de la douille (202), séparé de l'épaulement extérieur (208) individuel par une rainure annulaire (211), en tant qu'élément de complémentarité de formes axial de l'accouplement à baïonnette.

4. Arrangement selon au moins l'une des revendications 2 et 3, **caractérisé en ce que** dans une position de verrouillage de l'accouplement à baïonnette, l'épaulement intérieur (210) et l'épaulement extérieur (208) ou l'épaulement intérieur (210) et l'épaulement extérieur (208) individuel sont superposés dans le sens axial, de sorte qu'il existe un assemblage par complémentarité de formes du piston (203) avec la douille (202) .

5. Arrangement selon au moins l'une des revendications 1 à 4, **caractérisé en ce que** l'épaulement intérieur (210) est configuré en forme de portion circulaire ou en forme de portion annulaire et **en ce qu'**au moins un épaulement extérieur (208) est configuré de telle sorte que dans une position d'introduction de l'accouplement à baïonnette, il complète l'épaulement intérieur (210) pour former une bague axiale complète.

6. Arrangement selon au moins l'une des revendications 1 à 5, **caractérisé en ce que** l'épaulement intérieur (210) recouvre l'ouverture (209) dans une plage angulaire de rotation maximale de 180° et/ou **en ce que** l'au moins un épaulement extérieur (210) fait saillie de l'embout dans une plage angulaire de rotation maximale de 180°.

7. Arrangement selon au moins l'une des revendications 1 à 6, **caractérisé en ce que** le composant à piston et douille (201) comporte en outre un système anti-rotation (205, 206, 207, 213, 214, 215), le système anti-rotation (205, 206, 207, 213, 214, 215) étant configuré pour bloquer une rotation de la position de verrouillage à la position d'introduction.

8. Arrangement selon la revendication 7, **caractérisé en ce que** le système anti-rotation (205, 206, 207, 213, 214, 215) comporte un orifice (205, 215) qui suit un tracé axial dans le piston (203).

9. Arrangement selon la revendication 8, **caractérisé en ce que** le système anti-rotation (205, 206, 207, 213, 214, 215) comporte en outre un orifice (213) qui suit un tracé axial dans la douille, l'orifice (205, 215) dans le piston (203) et l'orifice (213) dans la douille (202) étant alignés dans la position de verrouillage.

10. Arrangement selon au moins l'une des revendications 8 et 9, **caractérisé en ce que** l'orifice (205, 215) dans le piston (203) et/ou l'orifice (213) dans la douille (202) est réalisé sous la forme d'un orifice taraudé (205).

11. Arrangement selon au moins l'une des revendications 7 à 10, **caractérisé en ce que** le système anti-rotation (205, 206, 207, 213, 214, 215) comporte une pièce de blocage (206) qui repose par complémentarité de formes dans le sens radial contre l'embout de la douille (202), la pièce de blocage (206) pouvant être fixée au piston (203) au moyen d'une vis (207) qui vient en prise dans l'orifice (205, 215) dans le piston (203) ou au moyen d'une goupille de serrage (214) qui vient en prise dans l'orifice (205, 215) dans le piston (203).

12. Arrangement selon au moins l'une des revendications 7 à 10, **caractérisé en ce que** l'orifice (205, 215) dans le piston (203) transperce l'épaulement intérieur (210) dans le sens axial et l'orifice (213) dans la douille (202) transperce l'au moins un épaulement extérieur (208) dans le sens axial.

13. Arrangement selon la revendication 12, **caractérisé en ce que** la vis (207) ou la goupille de serrage (214) vient simultanément en prise dans l'orifice (213) dans la douille (202) et dans l'orifice (205, 215) dans le piston (203).

14. Actionneur (401) qui peut être chargé avec un fluide sous pression, comprenant un vérin d'actionnement (104), une fourche de manœuvre (404) et un arrangement selon l'une des revendications 1 à 13, le vérin d'actionnement (104) étant réalisé sous la forme du composant à piston et douille (201) de manière à border la tringle de manœuvre (110) au moins partiellement dans le sens radial, le piston (203) du composant à piston et douille (201) divisant le vérin d'actionnement (104) de manière étanche au fluide sous pression en deux chambres (104a, 104b), le piston (203) étant disposé dans le vérin d'actionnement (104) de manière à pouvoir coulisser dans le sens axial, et le piston (203) étant couplé mécaniquement à la fourche de manœuvre (404) dans le sens axial de telle sorte qu'un mouvement axial du piston (203) cause un mouvement axial identique de la fourche de manœuvre (404).

15. Actionneur (401) selon la revendication 14, **caractérisé en ce que** le vérin d'actionnement (104) possède, à une première extrémité axiale, une première ouverture qui peut être fermée au moyen d'un couvercle (105) et, à une deuxième extrémité axiale, une deuxième ouverture, la deuxième ouverture étant configurée pour border la douille (202) dans le sens radial en garantissant une aptitude au coulissement axial dans la deuxième ouverture.

16. Actionneur (401) selon au moins l'une des revendications 14 à 15, **caractérisé en ce que** l'actionneur (401) comporte en outre un élément de rappel (406) qui pousse l'actionneur (401) dans une position de base.

17. Boîte de transfert (501) comprenant un verrouillage de différentiel (504) destiné à verrouiller une fonction de transfert de la boîte de transfert (504), le verrouillage de différentiel (504) pouvant être embrayé et de nouveau débrayé avec un actionneur (401), **caractérisée en ce que** l'actionneur (401) est un actionneur (401) selon au moins l'une des revendications 14 à 16.
